# EUROPÄISCHE PATENTSCHRIFT

(11) **EP 1 419 568 B1**
(45) Veröffentlichungstag und Bekanntmachung des Hinweises auf die Patenterteilung: **04.05.2005**
(21) Anmeldenummer: 03766374.7
(22) Anmeldetag: 31.07.2003
(51) Int. Cl.: H02K 11/00, H02K 9/06

(54) **ELEKTROMOTOR MIT HOHER IP-SCHUTZART**
ELECTRIC MOTOR WITH A HIGH IP-PROTECTIVE SYSTEM
MOTEUR ELECTRIQUE A PROTECTION IP ELEVEE

(30) Priorität: 01.08.2002 DE 20211857 U; 24.03.2003 DE 10313274
(43) Veröffentlichungstag der Anmeldung: 19.05.2004
(73) Patentinhaber: ebm-papst Mulfingen GmbH & Co.KG, 74673 Mulfingen (DE)
(72) Erfinder: STURM, Gerhard, 74673 Mulfingen (DE); REINHARDT, Wilhelm, 74575 Schrozberg - Gütbach (DE); KEMMER, Erich, 97980 Bad Mergentheim (DE); NADIG, Stephan, 74639 Zweiflingen - Friedrichsruhe (DE); BEST, Dieter, 74653 Ingelfingen (DE)
(74) Vertreter: Zapf, Christoph, Dipl.-Ing.
(86) Internationale Anmeldenummer: PCT/EP2003/008453
(87) Internationale Veröffentlichungsnummer: WO 2004/013944

(56) Entgegenhaltungen:
- EP-A- 0 501 198
- US-A- 4 431 931
- US-A- 4 883 982

## Beschreibung

Die vorliegende Erfindung betrifft einen Elektromotor mit einem im Wesentlichen geschlossenen bzw. gekapselten Motorgehäuse hoher IP-Schutzart nach DIN/IEC EN 60034-Teil 5, gemäß dem Oberbegriff des Patentanspruchs 1.

Derartige Elektromotoren sind bekannt (z.B. Prospekt Ziehl-Abegg "Der intelligente Antrieb", EC Flyer. p65-01/99); sie sind in der Regel als kollektorlose, elektronisch kommutierte Gleichstrom-Außenläufermotoren ausgeführt, wobei die gesamte erforderliche Steuerelektronik in das Motorgehäuse bzw. das angesetzte Elektronikgehäuse integriert ist. Dadurch muß der Elektromotor nur noch über äußere Anschlußleitungen an einer Versorgungsspannung angeschlossen werden. Das Motorgehäuse ist im Wesentlichen geschlossen bzw. gekapselt ausgeführt, abgesehen von einem für die Rotation notwendigen Ringspalt zwischen dem Außenläufer und dem angrenzenden Gehäusebereich, wobei dieser Ringspalt über eine Rotationsdichtung, üblicherweise eine Labyrinthdichtung, gegen Eindringen von Feuchtigkeit und sonstigen Fremdstoffen abgedichtet ist. Diese geschlossene Ausführung gewährleistet eine hohe Schutzart, z. B. IP54, führt aber auch zu Problemen durch innerhalb des Gehäuses im Betrieb entstehende Wärme der Motorwicklungen und der Leistungsbauteile der Steuerelektronik. Dadurch sind solche Elektromotoren nur für einen begrenzten Leistungsbereich geeignet.

Das Dokument US-A-4 883 982 beschreibt einen Elektromotor, der nicht im obigen Sinne gekapselt ist. Einerseits ist der Außenläufer nicht über eine Rotationsdichtung gegen den angrenzenden Gehäusebereich abgedichtet, andererseits wird zur Kühlung eine Luftströmung durch eine Elektronik sowie durch den Motor hindurch erzeugt, wobei Luft von außen angesaugt und nach Durchströmung des Gehäuses wieder nach außen geführt wird. Dies führt zwar zu einer guten Kühlung, hat aber den Nachteil, dass zusammen mit der von außen angesaugten Luft auch Feuchtigkeit und dergleichen eindringen können. Dieser bekannte Motor genügt daher nicht einer hohen IP-Schutzart.

Entsprechendes gilt auch für eine in dem Dokument US-A-4 431 931 beschriebene Kfz-Lichtmaschine, bei der mit einem zentrischen Ventilatorrad Luft von außen angesaugt und durch eine Steuerelektronik geführt wird.

Die EP-A-0 501 198 beschreibt ein durch einen bürstenlosen Gleichstrommotor angetriebenes Gebläse mit einem spiralförmigen Gehäuse. Zur Kühlung von elektronischen Bauteilen sind spezielle Kühlrippen vorgesehen, die auf der Innenseite des Gebläse-Spiralgehäuses parallel zum Gebläse-Luftstrom angeordnet sind.

Der vorliegenden Erfindung liegt die Aufgabe zugrunde, einen Elektromotor der genannten Art zu schaffen, der trotz des gekapselten Motorgehäuses für einen höheren Leistungsbereich geeignet ist.

Die Erfindung ist durch die Merkmale des unabhängigen Anspruchs 1 definiert. Bevorzugte Ausgestaltung sind in den abhängigen Ansprüchen enthalten.

Durch das innere Lüfterrad wird innerhalb des gekapselten Motorgehäuses eine innere Luftverwirbelung bewirkt. Dadurch werden innerhalb des Gehäuses Wärmezonen, sogenannte Hotspots, vermieden bzw. beseitigt, so dass eine Vergleichmäßigung der inneren Temeperatur erreicht wird. Dabei sind zusätzliche Mittel zur Wärmeabführung nach außen vorgesehen, wobei die innere Luftverwirbelung zu einer Unterstützung der Wärmeabfuhr nach außen führt. Der Außenläufer ist über eine Läuferwelle in einem in dem Stator sitzenden Lagertragrohr drehbar gelagert. Das Lagertragrohr ist einstückig aus einem gut wärmeleitenden Material bestehend mit einem auf der der Steuerelektronik zugewandten Seite radial nach außen geführten Ringflansch verbunden, der außerhalb des Motorgehäuses mit Kühlrippen versehen ist. Durch diese vorteilhafte Ausgestaltung wird eine sehr effektive Wärmeabfuhr aus dem Motorgehäuse nach außen erreicht, indem über das im Stator sitzende, in der Regel in ein Statorblechpaket unmittelbar eingepresste und daher in gut wärmeleitender Verbindung mit dem Stator stehende Lagertragrohr die Stromwärme aus den Statorwicklungen nach außen zu dem Ringflansch abgeleitet wird, von wo aus die Wärme dann über die vergrößerte Fläche der Kühlrippen effektiv an die Umgebungsluft abgegeben wird. Hierbei ist es vorteilhaft, wenn das Lagertragrohr mit dem Ringflansch über einen Übergangsabschnitt einstückig verbunden ist, wobei dieser Übergangsabschnitt trennwandartig zwischen dem Stator und der Steuerelektronik angeordnet ist. Hierdurch wird vorteilhafterweise ein Wärmeabfluß sowohl aus dem Stator als auch aus dem angrenzenden Bereich der Steuerelektronik gewährleistet.

In weiterer vorteilhafter Ausgestaltung der Erfindung trägt der Außenläufer in seinem dem Ringflansch zugewandten Bereich ein Luftrad mit den Kühlrippen axial gegenüberliegenden Lüfterrippen. Dadurch wird durch Ventilation die Wärmeabgabe an die Umgebungsluft noch deutlich verbessert.

Anhand von in der Zeichnung veranschaulichten, bevorzugten Ausführungsbeispielen soll die Erfindung genauer erläutert werden.

Dabei zeigen:
- Fig. 1: eine Perspektivansicht eines erfindungsgemäßen Elektromotors im montierten Zustand,
- Fig. 2: eine perspektivische Viertelschnittansicht des erfindungsgemäßen Elektromotors,
- Fig. 3: eine perspektivische Explosionsansicht des Elektromotors,
- Fig. 4: einen Axialschnitt durch den Motor,
- Fig. 5 und 6: zwei unterschiedliche Perspektivansichten eines Einzelteils und
- Fig. 7 und 8: zwei Perspektivansichten eines weiteren Einzelteils des erfindungsgemäßen Elektromotors.

In den verschiedenen Figuren der Zeichnung sind gleiche Teile stets mit den gleichen Bezugszeichen versehen und brauchen daher in der Regel auch jeweils nur einmal beschrieben zu werden.

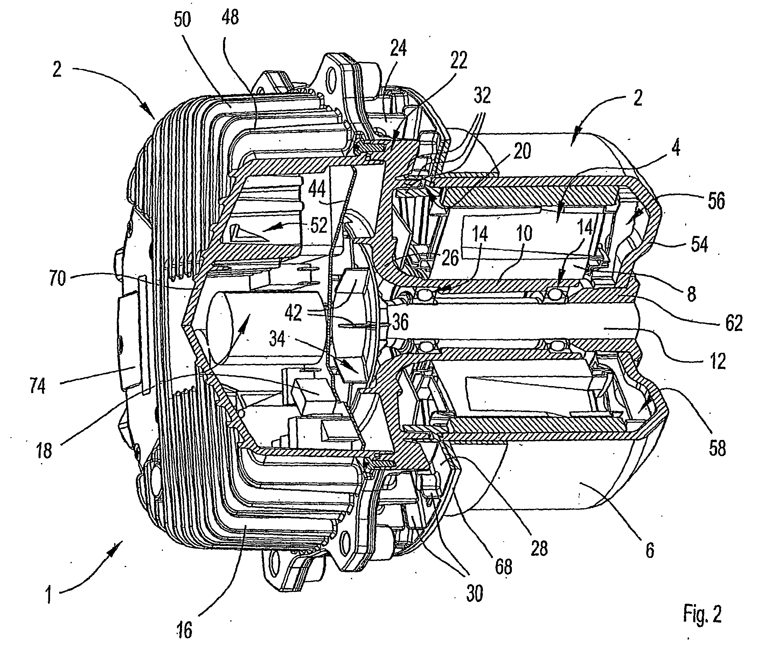

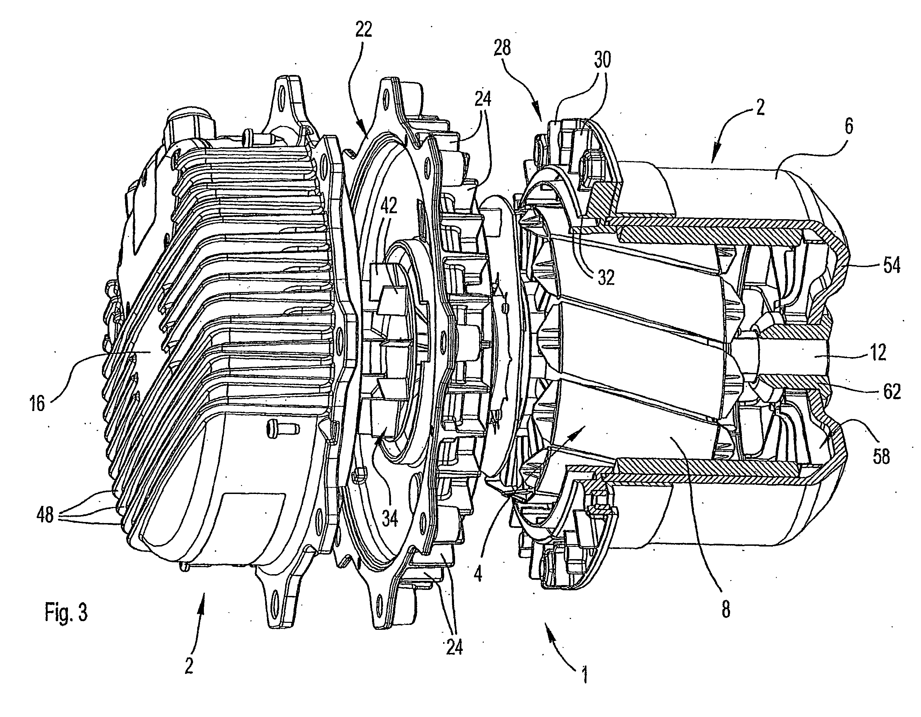

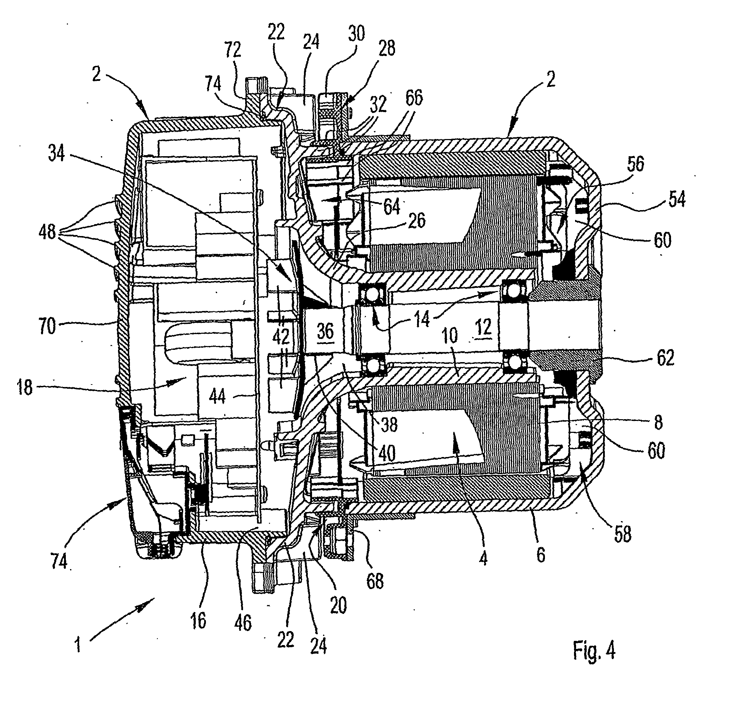

Ein erfindungsgemäßer Elektromotor 1 ist bevorzugt als kollektorloser elektronisch kommutierter Gleichstrom-Außenläufermotor ausgebildet und weist gemäß Anspruch 1 ein gekapseltes Motorgehäuse 2 derart auf, dass der Motor 1 einer hohen IP-Schutzart nach IEC 60034-5 genügt, beispielsweise IP54. Der Elektromotor 1 besteht aus einem Stator 4 (siehe Fig. 2 bis 4) und einem den Stator 4 von einer Seite her als Teil des Motorgehäuses 2 topfartig umschließenden Außenläufer 6. Der Stator 4 besteht aus einem Statorblechpaket 8 (Fig. 4) mit nicht näher dargestellten Statorwicklungen. Der Stator 4 sitzt mit seinem Statorblechpaket 8 auf einem Lagertragrohr 10, welches direkt mit metallischem, gut wärmeleitendem Kontakt in eine axiale Öffnung des Statorblechpaketes 8 eingepresst ist. Der Außenläufer 6 ist über eine Läuferwelle 12 und Lagerelemente 14 in dem Lagertragrohr 10 drehbar gelagert. Auf der dem Außenläufer 6 axial gegenüberliegenden Seite des Stators 4 schließt sich als weiterer Teil des Motorgehäuses 2 ein Elektronikgehäuse 16 an, in dem die gesamte Steuerelektronik 18 für den Betrieb des Elektromotors 1 untergebracht ist. Ein zwischen dem rotierenden Außenläufer 6 und dem übrigen Motorgehäuse 2 gebildeter Spalt ist über eine geeignete Rotationsdichtung 20, die insbesondere als Labyrinthdichtung (siehe insbesondere Fig. 2 und 4) ausgeführt ist, gegen Eindringen von Feuchtigkeit oder sonstigen Fremdstoffen von außen abgedichtet. Dadurch wird die angestrebte hohe IP-Schutzart gewährleistet.

Wegen der geschlossenen bzw. gekapselten Ausführung des Motorgehäuses 2 sind zunächst Mittel zum Abführen von innerer Wärme nach außen vorgesehen. Dazu ist das Lagertragrohr 10 einstückig aus einem gut wärmeleitenden Material bestehend mit einem auf der der Steuerelektronik 18 zugewandten Seite radial nach außen geführten Ringflansch 22 verbunden, der außerhalb des Motorgehäuses 2 mit Kühlrippen 24 versehen ist. Dieser Ringflansch 22 ist einstückig über einen Übergangsabschnitt 26 mit dem Lagertragrohr 10 verbunden, wobei der Übergangsabschnitt 26 trennwandartig zwischen dem Stator 4 und der Steuerelektronik 18 angeordnet ist. Durch diese Ausgestaltung wird einerseits die Stromwärme aus dem Stator 4 über das Statorblechpaket 8, das Lagertragrohr 10 und den Übergangsabschnitt 26 an den Ringflansch 22 abgeleitet. Andererseits nimmt der Übergangsabschnitt 26 auch Wärme von der Seite der Steuerelektronik 18 auf und führt diese ebenfalls an den Ringflansch 22 ab. Von dort wird die gesamte innere Wärme über die Kühlrippen 24 effektiv an die Umgebungsluft abgegeben.

Dazu ist es zudem vorteilhaft, wenn der Außenläufer 6 in seinem dem Ringflansch 22 zugewandten Bereich ein Luftrad 28 mit Lüfterrippen 30 trägt, wobei die Lüfterrippen 30 den Kühlrippen 24 axial gegenüberliegen. In der dargestellten Ausführungsform erstrecken sich die Kühlrippen 24 des Ringflansches 22 sowie auch die Lüfterrippen 30 des Luftrades 28 im Wesentlichen in axialer und radialer Richtung aufeinander zu. Diese Ausführung ist sowohl für Rechts- als auch Linkslauf des Außenläufers 6 geeignet. Alternativ dazu können aber auch die Kühlrippen 24 und/oder die Lüfterrippen 30 in Abhängigkeit von der Drehrichtung des Außenläufers 6 schräg zur Axial- und/oder Radialrichtung verlaufen. Zudem ist auch eine gekrümmte Ausgestaltung möglich, beispielsweise bezüglich der Drehrichtung vorwärts oder rückwärts gekrümmt.

Die oben bereits erwähnte Rotations- bzw. Labyrinthdichtung 20 ist in der dargestellten Ausgestaltung zwischen dem Außenläufer 6 und dem Ringflansch 22 gebildet, und zwar speziell zwischen dem am Außenläufer 6 befestigten Luftrad 28 und dem Ringflansch 22. Dazu weisen der Ringflansch 22 und das Luftrad 28 axial ineinander greifende Stege 32 auf.

Der Elektromotor 1 weist weiterhin Mittel zur inneren Kühlung durch innere Luftverwirbelung im Bereich des Stators 4 und/oder der Steuerelektronik 18 auf. So sitzt im Bereich zwischen dem Stator 4 und der Steuerelektronik 18 ein inneres Lüfterrad 34 auf einem verlängerten Ende 36 der Läuferachse 12. Hierbei ist es vorteilhaft, wenn dieses innere Lüfterrad 34 in axialer Richtung zumindest bereichsweise innerhalb eines sich von dem Lagertragrohr 10 ausgehend trichterartig erweiternden Raums 38 angeordnet ist, wobei ein mit dem Ende 36 der Läuferwelle 12 verbundener Halteabschnitt 40 sich in Richtung eines vom Lagertragrohr 10 ausgehenden Trichter-Anfangs erstreckt (siehe hierzu insbesondere Fig. 4). Durch diese Ausgestaltung wird eine kurze Baulänge erreicht. Der trichterartige Raum 38 wird hierbei durch einen entsprechend trichterartigen, im Längsschnitt bogenförmig gekrümmten Verlauf des Übergangsabschnittes 26 zwischen dem Lagertragrohr 10 und dem nach außen geführten Ringflansch 22 gebildet.

Das innere Lüfterrad 34 weist Luftflügel 42 auf, die in der dargestellten Ausführung in Axial- und Radialrichtung verlaufen. Auch hier kann aber alternativ vorgesehen sein, die Luftflügel 42 zur Axial- und/oder Radialrichtung in Abhängigkeit von der Drehrichtung schräg auszurichten oder gegebenenfalls auch vorwärts oder rückwärts gekrümmt auszubilden.

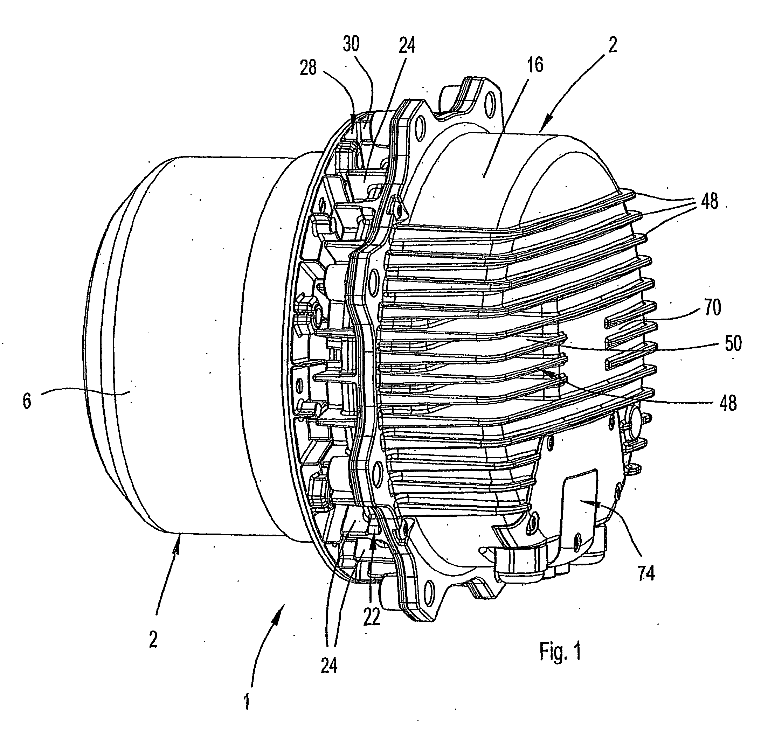

Die Steuerelektronik 18 ist zumindest teilweise auf einer von dem inneren Lüfterrad 34 axial wegweisenden Seite einer zur Drehachse senkrechten Leiterplatte 44 angeordnet. Dabei ist radial zwischen der Leiterplatte 44 und dem Motor- bzw. Elektronikgehäuse 2/16 ein Umfangsspalt 46 gebildet. Zudem weist die Leiterplatte 44 in ihrem inneren Flächenbereich mindestens eine nicht erkennbare und nicht bezeichnete Lochöffnung auf. Der Umfangsspalt 46 und die (mindestens eine) Lochöffnung bilden Strömungspassagen für durch das Lüfterrad 34 bewegte Luft. Diese Luft kontaktiert dann von innen das Elektronikgehäuse 16, welches deshalb vorzugsweise außenseitige Kühlrippen 48 aufweist. Andererseits überströmt die Luft auch den Übergangsabschnitt 26, so dass Wärme effektiv an den Ringflansch 22 und nach außen geführt wird. Hierbei können bestimmte Leistungsbauteile der Steuerelektronik 18, die im Betrieb Wärme erzeugen, mit wärmeleitendem Kontakt innenseitig an dem Elektronikgehäuse 16 befestigt sein, so dass die Wärme direkt nach außen abgeleitet wird. Dies wird durch zusätzliche innenseitig am Elektronikgehäuse 16 angebrachte Kühlrippen unterstützt. Bei den in Fig. 1 und 2 dargestellten Ausführungen weist dazu das Elektronikgehäuse 16 einen nach innen vorspringenden und außenseitig eine Vertiefung 50 bildenden Halteabschnitt 52 (siehe Fig. 2) für mindestens ein zu kühlendes Bauteil der Steuerelektronk 18 auf. Dabei sind bevorzugt innerhalb der außenseitigen Vertiefung 50 ebenfalls Kühlrippen 48 angeordnet.

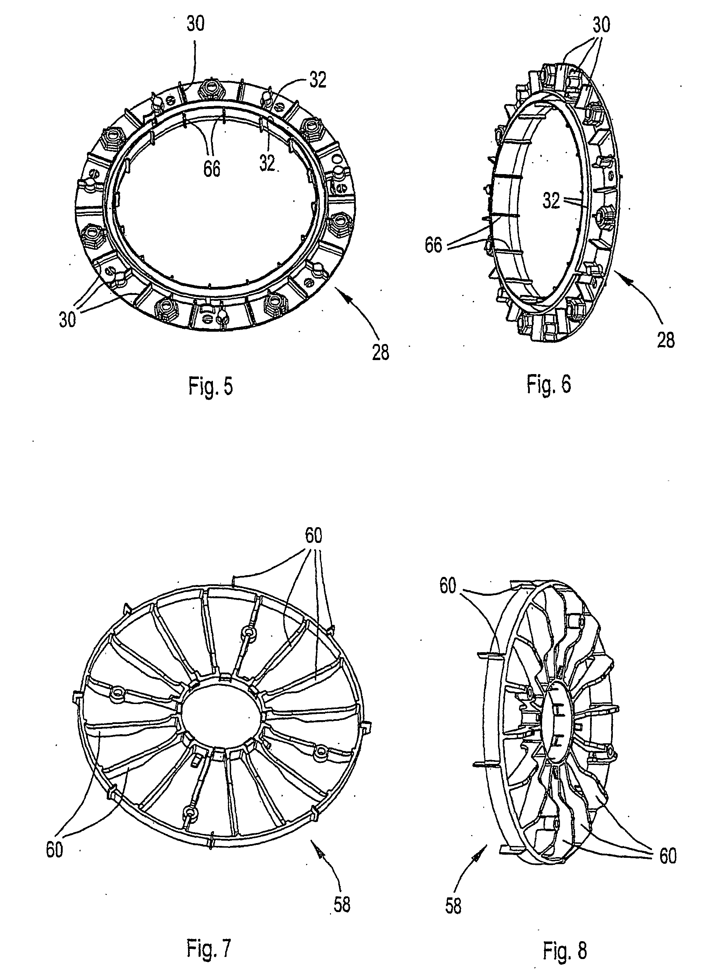

In weiterer Ausgestaltung ist - ebenfalls zur inneren Kühlung/Luftverwirbelung - in einem zwischen dem Stator 4 und einem topfartig geschlossenen Ende 54 des Außenläufers 6 gebildeten Innenraum 56 ein mit dem Außenläufer 6 rotierendes Kühlrad 58 angeordnet. Auch dieses Kühlrad 58 kann gerade oder schräg zur Axial - und/oder Radialrichtung ausgerichtete Luftrippen 60 aufweisen. Das vorzugsweise als Kunststoff-Formteil ausgebildete (siehe auch Fig. 7 und 8) Kühlrad 58 ist in der dargestellten Ausführung auf einer auf der Läuferachse 12 sitzenden Läufemabe 62 befestigt, insbesondere verrastet.

Zur weiteren inneren Kühlung kann mit Vorteil vorgesehen sein, dass der Außenläufer 6 in seinem der Steuerelektronik 18 zugekehrten Bereich radial nach innen in Richtung eines inneren, zwischen dem Stator 4 und dem Übergangsabschnitt 26 des Lagertragrohrs 10 gebildeten Gehäuse-Ringraums 64 weisende, insbesondere axial verlaufende Luftrippen 66 aufweist. Bevorzugt sind diese Luftrippen 66 Teil des mit dem Außenläufer 6 verbundenen, äußeren Luftrades 28. Dazu wird auch auf Fig. 5 und 6 verwiesen. Daraus ist auch gut erkennbar, dass das Luftrad 28 zusammen mit den Lüfterrippen 30, den die Labyrinthdichtung 20 bildenden Stegen 32 und den Luftrippen 66 als einstückiges Formteil aus Kunststoff ausgebildet ist. Gemäß Fig. 4 wird das Luftrad 28 über einen Flanschring 68 auf dem Außenläufer 6 befestigt.

Auch das innere Kühlrad 34 und das innere Lüfterrad 58 (siehe Fig. 7 und 8) sind jeweils als einstückiges Formteil aus Kunststoff ausgebildet.

Wie sich weiterhin aus Fig. 4 ergibt, ist das Elektronikgehäuse 16 topfförmig ausgebildet und mit einem einem Gehäuseboden 70 gegenüberliegenden Verbindungsrand 72 insbesondere abgedichtet (Dichtung 74) mit dem äußeren, mit dem Lagertragrohr 10 verbundenen Ringflansch 22 verbunden. Der Innenraum des Elektronikgehäuses 16 ist somit vollständig nach außen abgedichtet. Zudem weist das Elektronikgehäuse 16 eine Öffnung zum elektrischen Anschluß auf, wobei diese Öffnung mit einem Anschlußsteckverbinder 74 vorzugsweise dicht verschließbar ist.

## Patentansprüche

1. Elektromotor (1) mit einem gekapselten Motorgehäuse (2) hoher IP-Schutzart von beispielsweise IP54 nach DIN/IEC EN60034-Teil 5, bestehend aus einem Stator (4) und einem den Stator (4) von einer Seite her als Teil des Motorgehäuses (2) topfartig umschließenden, über eine Läuferwelle (12) gelagerten Außenläufer (6) sowie einem sich als weiterer Teil des Motorgehäuses (2) auf der dem Außenläufer (6) axial gegenüberliegenden Seite anschließenden, eine Steuerelektronik (18) enthaltenden Elektronikgehäuse (16), wobei ein zwischen dem Außenläufer (6) und dem angrenzenden Bereich des Motorgehäuses (2) gebildeter Ringspalt gegen Eindringen von Feuchtigkeit und sonstigen Fremdstoffen über eine Rotationsdichtung (20), insbesondere in Form einer Labyrinthdichtung, abgedichtet ist,
**gekennzeichnet durch** Mittel zur inneren Kühlung **durch** innere Luftverwirbelung im Bereich des Stators (4) und der Steuerelektronik (18) sowie **durch** Mittel zur Abführung der inneren Wärme nach außen, wobei der Außenläufer (6) über die Läuferwelle (12) in einem in dem Stator (4) sitzenden Lagertragrohr (10) drehbar gelagert ist, wobei das Lagertragrohr (10) einstückig aus einem gut wärmeleitenden Material bestehend mit einem auf der der Steuerelektronik (18) zugewandten Seite radial nach außen geführten Ringflansch (22) verbunden ist, der außerhalb des Motorgehäuses (2) mit Kühlrippen (24) versehen ist, und wobei im Bereich zwischen dem Stator (4) und der Steuerelektronik (18) ein inneres Lüfterrad (34) auf einem verlängerten Ende (36) der Läuferwelle (12) sitzt.

2. Elektromotor nach Anspruch 1,
**dadurch gekennzeichnet, dass** derAußenläufer(6)inseinem dem Ringflansch (22) zugewandten Bereich ein Luftrad (28) mit den Kühlrippen (24) axial gegenüberliegenden Lüfterrippen (30) trägt.

3. Elektromotor nach Anspruch 2,
**dadurch gekennzeichnet, dass** sich die Kühlrippen (24) des Ringflansches (22) und die Lüfterrippen (30) des Luftrades (28) im Wesentlichen axial aufeinanderzu sowie in radialer Richtung erstrecken.

4. Elektromotor nach Anspruch 2,
**dadurch gekennzeichnet, dass** die Kühlrippen (24) und/oder die Lüfterrippen (30) in Abhängigkeit von der Drehrichtung des Außenläufers (6) schräg zur Axial- und/oder Radialrichtung verlaufen.

5. Elektromotor nach einem der Ansprüche 1 bis 4,
**dadurch gekennzeichnet, dass** das Lagertragrohr (10) mit dem Ringflansch (22) über einen Übergangsabschnitt (26) einstückig verbunden ist, wobei der Übergangsabschnitt (26) trennwandartig zwischen dem Stator (4) und der Steuerelektronik (18) angeordnet ist.

6. Elektromotor nach einem der Ansprüche 1 bis 5,
**dadurch gekennzeichnet, dass** dasinnereLüfterrad(34)in axialer Richtung zumindest bereichsweise innerhalb eines sich von dem Lagertragrohr (10) ausgehend trichterartig erweiternden Raums (38) angeordnet ist, wobei ein mit dem Ende (36) der Läuferachse (12) verbundener Halteabschnitt (40) sich in Richtung eines vom Lagertragrohr (10) ausgehenden Trichteranfangs erstreckt.

7. Elektromotor nach Anspruch 6,
**dadurch gekennzeichnet, dass** der trichterartige Raum (38) durch einen entsprechend trichterartigen, im Längsschnitt bogenförmig gekrümmten Verlauf des Übergangsabschnittes (26) zwischen dem Lagertragrohr (10) und dem nach außen geführten Ringflansch (22) gebildet ist.

8. Elektromotor nach einem der Ansprüche 1 bis 7,
**dadurch gekennzeichnet, dass** dasinnereLüfterrad(34) Luftflügel (42) aufweist, die in Axial- und Radialrichtung verlaufen oder zur Axial- und/oder Radialrichtung in Abhängigkeit von der Drehrichtung schräg ausgerichtet sind.

9. Elektromotor nach einem der Ansprüche 1 bis 8,
**dadurch gekennzeichnet, dass** die Steuerelektronik (18) zumindest teilweise auf einer von dem inneren Lüfterrad (34) wegweisenden Seite einer Leiterplatte (44) angeordnet ist, wobei radial zwischen der Leiterplatte (44) und dem Elektronikgehäuse (16) ein Umfangsspalt (46) und im inneren Flächenbereich der Leiterplatte (44) mindestens eine Lochöffnung als Strömungspassagen für durch das Lüfterrad (34) bewegte Luft gebildet sind.

10. Elektromotor nach einem der Ansprüche 1 bis 9,
**dadurch gekennzeichnet, dass** das Elektronikgehäuse (16) außenseitige Kühlrippen (48) aufweist.

11. Elektromotor nach einem der Ansprüche 1 bis 10,
**dadurch gekennzeichnet, dass** mindestens ein im Betrieb Wärme erzeugendes Bauteil der Steuerelektronik (18) mit wärmeleitendem Kontakt innenseitig an dem Elektronikgehäuse (16) befestigt ist.

12. Elektromotor nach einem der Ansprüche 1 bis 11,
**dadurch gekennzeichnet, dass** das Elektronikgehäuse (16) mindestens einen nach innen vorspringenden und außenseitig eine Vertiefung (50) bildenden Halteabschnitt (52) für mindestens ein zu kühlendes Bauteil der Steuerelektronik (18) aufweist, wobei vorzugsweise in der außenseitigen Vertiefung (50) Kühlrippen (48) angeordnet sind.

13. Elektromotor nach einem der Ansprüche 1 bis 12,
**dadurch gekennzeichnet, dass** in einem zwischen dem Stator (4) und einem topfartig geschlossenen Ende (54) des Außenläufers (6) gebildeten Innenraum (56) ein mit dem Außenläufer (6) rotierendes Kühlrad (58) angeordnet ist.

14. Elektromotor nach Anspruch 13,
**dadurch gekennzeichnet, dass** dasKühlrad(58)aufeinerauf der Lüfterachse (12) sitzenden Läufemabe (62) befestigt, vorzugsweise verrastet ist.

15. Elektromotor nach einem der Ansprüche 1 bis 14,
**dadurch gekennzeichnet, dass** der Außenläufer (6) in seinem der Steuerelektronik (18) zugekehrten Bereich radial nach innen in Richtung eines inneren Gehäuse-Ringraumes (64) weisende Luftrippen (66) aufweist.

16. Elektromotor nach Anspruch 15,
**dadurch gekennzeichnet, dass** die Luftrippen (66) Teil des mit dem Außenläufer (6) verbundenen, äußeren Luftrades (28) sind.

17. Elektromotor nach einem der Ansprüche 2 bis 16,
**dadurch gekennzeichnet, dass** das Luftrad (28) als einstückiges Formteil aus Kunststoff ausgebildet ist.

18. Elektromotor nach einem der Ansprüche 1 bis 17,
**dadurch gekennzeichnet, dass** das innere Lüfterrad (34) als einstückiges Formteil aus Kunststoff ausgebildet ist.

19. Elektromotor nach einem der Ansprüche 13 bis 18,
**dadurch gekennzeichnet, dass** das innere Kühlrad (58) als einstückiges Formteil aus Kunststoff ausgebildet ist.

20. Elektromotor nach einem der Ansprüche 1 bis 19,
**dadurch gekennzeichnet, dass** das Elektronikgehäuse (16) topfförmig ausgebildet und mit einem einem Gehäuseboden (70) gegenüberliegenden Verbindungsrand (72) insbesondere abgedichtet mit dem äußeren, mit dem Lagertragrohr (10) verbundenen Ringflansch (22) verbunden ist.

## Claims

1. An electric motor (1) having a totally enclosed motor housing (2) and a high IP-protection class, for example, IP 54 according to DIN/IEC EN60034-Part 5, comprising a stator (4) and an external rotor (6) mounted via a rotor shaft (12) and enclosing the stator (4) from one side in the form of a pan as part of the motor housing (2), and an electronics housing (16) containing an electronic control system (18) and adjoining as another part of the motor housing (2) on the side axially opposite the external rotor (6), wherein an annular gap formed between the external rotor (6)and the adjacent region of the motor housing (2) is sealed to prevent the penetration of moisture and other foreign substances by means of a rotational seal (20), in particular in the form of a labyrinth seal,
**characterised by** means for internal cooling by internal air turbulence in the region of the stator (4) and the electronic control system (18) and by means for conducting the internal heat to the outside, wherein the external rotor (6) is rotatably mounted via the rotor shaft (12) in a mounting support tube (10) located within the stator (4), wherein the mounting support tube (10), comprising, in a single piece, a highly heat-conductive material, is connected to an annular flange (22) guided radially outwards on the side facing the electronic control system (18), which annular flange is provided outside the motor housing (2) with cooling fins (24), and wherein in the region between the stator (4) and the electronic control system (18) an internal fan wheel (34) is positioned on an extended end (36) of the rotor shaft (12).

2. An electric motor according to Claim 1,
**characterised in that**, in its region facing the annular flange (22), the external rotor (6) bears a fan wheel (28) with fan ribs (30) positioned axially opposite the cooling fins (24).

3. An electric motor according to Claim 2,
**characterised in that** the cooling fins (24) of the annular flange (22) and the fan ribs (30) of the fan wheel (28) extend substantially axially towards one another as well as in a radial direction.

4. An electric motor according to Claim 2,
**characterised in that** the cooling fins (24) and/or the fan rips (30) extend obliquely to the axial and/or radial direction depending on the direction of rotation of the external rotor (6).

5. An electric motor according any one of Claims 1 to 4,
**characterised in that** the mounting support tube (10) is connected, in a single piece, with the annular flange (22) via a transition portion (26), the transition portion (26) being positioned in the form of a separating wall between the stator (4) and the electronic control system (18).

6. An electric motor according to any one of Claims 1 to 5,
**characterised in that** the internal fan wheel (34) in an axial direction is positioned at least regionally within a chamber (38) widening like a funnel starting from the mounting support tube (10), wherein a retaining portion (40) connected to the end (36) of the rotor axis (12) extends in the direction of a funnel front end leading from the mounting support tube (10).

7. An electric motor according to Claim 6,
**characterised in that** the funnel-like chamber (38) is formed by a correspondingly funnel-like course of the transition portion (26) between the mounting support tube (10) and the outwardly guided annular flange (22), which course is arcuate in longitudinal section.

8. An electric motor according to any one of Claims 1 to 7,
**characterised in that** the internal fan wheel (34) has fan wings (42) which extend in an axial and radial direction or are aligned obliquely to the axial and/or radial direction depending on the direction of rotation.

9. An electric motor according to any one of Claims 1 to 8,
**characterised in that** the electronic control system (18) is arranged at least partially on a side of a circuit board (44) pointing away from the internal fan wheel (34), wherein a circumferential gap (46) is formed radially between the circuit board (44) and the electronics housing (16) and at least one hole opening is formed within the inner surface region of the circuit board (44) as flow passages for air moved by the fan wheel (34).

10. An electric motor according to any one of Claims 1 to 9,
**characterised in that** the electronics housing (16) has cooling ribs (48) on the outside.

11. An electric motor according to any one of Claims 1 to 10,
**characterised in that** at least one component of the electronic control system (18) which generates heat during operation is fastened on the inside of the electronics housing (16) in heat-conductive contact.

12. An electric motor according to any one of Claims 1 to 11,
**characterised in that** the electronics housing (16) has at least one retaining portion (52) which projects inwards and on the outside forms a recess (50) for at least one component of the electronic control system (18) to be cooled, cooling fins (48) preferably being arranged in the outside recess (50).

13. An electric motor according to any one of Claims 1 to 12,
**characterised in that** a cooling wheel (58) rotating with the external rotor (6) is arranged within a chamber (56) formed between the stator (4) and an end (54) of the external rotor (6), which end is closed in the form of a pan.

14. An electric motor according to Claim 13,
**characterised in that** the cooling wheel (58) is fastened, preferably locked, on a rotor hub (62) positioned on the fan axle (12).

15. An electric motor according to any one of Claims I to 14,
**characterised in that**, in its region turned towards the electronic control system (18), the external rotor (6) has fan ribs (66) pointing radially inwards in the direction of an internal-housing annular chamber.

16. An electric motor according to Claim 15,
**characterised in that** the fan ribs (66) are part of the external fan wheel (28) connected to the external rotor (6).

17. An electric motor according to any one of Claims 2 to 16,
**characterised in that** the fan wheel (28) is in the form of an integral moulded part made of plastics material.

18. An electric motor according to any one of Claims I to 17,
**characterised in that** the internal fan wheel (34) is in the form of an integral moulded part made of plastics material.

19. An electric motor according to any one of Claims 13 to 18,
**characterised in that** the internal cooling wheel (58) is in the form of an integral moulded part made of plastics material.

20. An electric motor according to any one of Claims 1 to 19,
**characterised in that** the electronics housing (16) is in the form of a pan and is connected to a connecting margin (72) positioned opposite a housing floor (70) in particular sealed with the external annular flange (22) connected to the mounting support tube (10).

## Revendications

1. Moteur électrique (1), comprenant un carter moteur blindé (2), d'un type de protection IP élevé, par exemple IP 54 selon le document DIN/IEC EN60034, partie 5, composé d'un stator (4) et d'un induit extérieur (6) entourant le stator (4) à partir d'un côté, à la façon d'un pot, en tant qu'élément du carter moteur (2) logé par l'intermédiaire d'un arbre d'induit (12) et comprenant un boîtier électronique (16) se raccordant en tant qu'élément supplémentaire du carter moteur (2) sur le côté axialement opposé à l'induit extérieur (6) et contenant un système électronique de commande (18), une fente annulaire formée entre l'induit extérieur (6) et la zone adjacente du carter moteur (2) étant étanchéifiée contre la pénétration d'humidité et d'autres substances étrangères par l'intermédiaire d'un joint de rotation (20), notamment d'une garniture en labyrinthe,
**caractérisé par** des moyens pour le refroidissement interne par tourbillonnement d'air interne dans la zone du stator (4) et du système électronique de commande (18), ainsi que par des moyens pour l'évacuation de la chaleur intérieure vers l'extérieur, l'induit extérieur (6) étant logé de façon rotative par l'intermédiaire de l'arbre d'induit (12) dans un tube support de palier (10) logé dans le stator (4), le tube support de palier (10) constitué en monobloc en un matériau bon conducteur de chaleur étant relié au moyen d'une bride annulaire (22) guidée en direction radiale vers l'extérieur sur le côté dirigé vers le système électronique de commande (18), qui à l'extérieur du carter moteur (2) est muni de nervures de refroidissement et dans la zone du stator (4) et du système électronique de commande (18), une roue interne de ventilateur (34) étant logée sur une extrémité rallongée (36) de l'arbre d'induit (12).

2. Moteur électrique selon la revendication 1,
**caractérisé en ce que** dans sa zone dirigée vers la bride annulaire (22), l'induit externe (6) est muni d'une roue de ventilation (28) comprenant des nervures de ventilation (30) opposées en direction axiale aux nervures de refroidissement (24).

3. Moteur électrique selon la revendication 2,
**caractérisé en ce que** les nervures de refroidissement (24) de la bride annulaire (22) et les nervures de ventilation (30) de la roue de ventilation (28) s'étendent sensiblement les unes vers les autres en direction axiale et également en direction radiale.

4. Moteur électrique selon la revendication 2,
**caractérisé en ce que** les nervures de refroidissement (24) et/ou les nervures de ventilation (30) s'étendent en oblique par rapport à la direction axiale et/ou radiale, en fonction du sens de rotation de l'induit externe (6).

5. Moteur électrique selon l'une quelconque des revendications 1 à 4,
**caractérisé en ce que** le tube support de palier (10) est relié en monobloc au moyen de la bride annulaire (22), par l'intermédiaire d'un tronçon de transition (26), le tronçon de transition (26) étant disposé à la façon d'une paroi de séparation entre le stator (4) et le système électronique de commande (18).

6. Moteur électrique selon l'une quelconque des revendications 1 à 5,
**caractérisé en ce qu'**en direction axiale, la roue de ventilateur interne (34) est disposée au moins par secteurs à l'intérieur d'un espace (38) s'élargissant à la manière d'une trémie à partir du tube support de palier (10), un tronçon de maintien (40) relié à l'extrémité (36) de l'axe de l'induit (12) s'étendant en direction d'un début de trémie partant du tube support de palier (10).

7. Moteur électrique selon la revendication 6,
**caractérisé en ce que** l'espace du type d'une trémie (38) est formé par un trajet à la manière d'une trémie, courbé en arc en coupe longitudinale du tronçon de transition (26) entre le tube support de palier (10) et la bride annulaire (22) guidée vers l'extérieur.

8. Moteur électrique selon l'une quelconque des revendications 1 à 7,
**caractérisé en ce que** la roue de ventilateur interne (34) est munie d'ailettes de ventilateur (42) qui s'étendent en direction axiale et radiale ou qui sont orientées en oblique dans la direction axiale et radiale, en fonction du sens de rotation.

9. Moteur électrique selon l'une quelconque des revendications 1 à 8,
**caractérisé en ce que** le système électronique de commande (18) est disposé au moins partiellement sur un côté d'une carte de circuits imprimés (44) qui s'éloigne de la roue de ventilateur interne (34), en direction radiale entre la carte de circuits imprimés (44) et le boîtier électronique (16) une fente périphérique (46) et dans la zone superficielle intérieure de la carte de circuits imprimés (44) au moins un orifice percé étant formés en tant que passages de circulation pour l'air mis en mouvement par la roue de ventilateur (34).

10. Moteur électrique selon l'une quelconque des revendications 1 à 9,
**caractérisé en ce que** le boîtier électronique (16) est doté de nervures de refroidissement (48) sur sa face extérieure.

11. Moteur électrique selon l'une quelconque des revendications 1 à 10,
**caractérisé en ce qu'**au moins un élément du système électronique de commande (18) générant de la chaleur lorsqu'il fonctionne est fixé sur la face interne du boîtier électronique (16) avec un contact conducteur de chaleur.

12. Moteur électrique selon l'une quelconque des revendications 1 à 11,
**caractérisé en ce que** le boîtier électronique (16) est muni d'au moins un tronçon de maintien (52) saillant vers l'intérieur et formant un creux (50) sur la face externe pour au moins un élément de refroidissement du système électronique de commande (18), des nervures de refroidissement (48) étant disposée de préférences dans le creux (50) situé sur la face externe.

13. Moteur électrique selon l'une quelconque des revendications 1 à 12,
**caractérisé en ce qu'**une roue de refroidissement (58) qui est en rotation avec l'induit externe (6) est disposée dans un espace interne (56) formé entre le stator (4) et une extrémité (54) de l'induit externe (6) fermée à la manière d'un pot.

14. Moteur électrique selon la revendication 13,
**caractérisé en ce que** la roue de refroidissement (58) est fixée, de préférence enclenchée sur un moyeu d'induit (62) qui est logé sur l'axe du ventilateur (12).

15. Moteur électrique selon l'une quelconque des revendications 1 à 14,
**caractérisé en ce que** dans sa zone qui est dirigée vers le système électronique de commande (18), le ventilateur externe (6) est muni de nervures de ventilation (66) dirigées en direction radiale vers l'intérieur, en direction d'un espace annulaire (64) interne du boîtier.

16. Moteur électrique selon la revendication 15,
**caractérisé en ce que** les nervures de ventilation (66) sont un élément de la roue de ventilation externe (28) qui est reliée à l'induit externe (6).

17. Moteur électrique selon l'une quelconque des revendications 2 à 16,
**caractérisé en ce que** la roue de ventilation (28) est conçue en tant que pièce moulée en monobloc en matière plastique.

18. Moteur électrique selon l'une quelconque des revendications 1 à 17,
**caractérisée en ce que** la roue de ventilateur interne (34) est conçue en tant que pièce moulée en monobloc en matière plastique.

19. Moteur électrique selon l'une quelconque des revendications 13 à 18,
**caractérisé en ce que** la roue de refroidissement interne (58) est conçue en tant que pièce moulée en monobloc en matière plastique.

20. Moteur électrique selon l'une quelconque des revendications 1 à 19,
**caractérisé en ce que** le boîtier électronique (16) est conçu sous la forme d'un pot et relié notamment de façon étanchéifiée par rapport à l'extérieur comprenant une bride annulaire (22) reliée au tube support de palier (10), par l'intermédiaire d'un bord de liaison (72) opposé à un fond du boîtier (70).
